# EUROPÄISCHE PATENTSCHRIFT

(11) **EP 3 347 687 B1**
(45) Veröffentlichungstag und Bekanntmachung des Hinweises auf die Patenterteilung: **03.07.2019**
(21) Anmeldenummer: 16757191.8
(22) Anmeldetag: 15.08.2016
(51) Int. Cl.: G01J 3/02, G01J 3/28, G01J 3/453, G01J 3/447, G01J 3/45

(54) **MINIATURSPEKTROMETER UND SPEKTROSKOPISCHES VERFAHREN**
MINIATURE SPECTROMETER AND SPECTROSCOPIC METHOD
SPECTROMÈTRE MINIATURE ET PROCÉDÉ SPECTROSCOPIQUE

(30) Priorität: 10.09.2015 DE 102015217343; 12.10.2015 DE 102015219672
(43) Veröffentlichungstag der Anmeldung: 18.07.2018
(73) Patentinhaber: Robert Bosch GmbH, 70442 Stuttgart (DE)
(72) Erfinder: HERRMANN, Ingo, 71292 Friolzheim (DE); HUSNIK, Martin, 75210 Keltern (DE); BAUMGART, Eugen, 70376 Stuttgart (DE); HUBER, Christian, 71638 Ludwigsburg (DE); STEIN, Benedikt, 70193 Stuttgart (DE)
(86) Internationale Anmeldenummer: PCT/EP2016/069320
(87) Internationale Veröffentlichungsnummer: WO 2017/041992

(56) Entgegenhaltungen:
- US-A1- 2012 268 745
- ZHANG C ET AL: "A static polarization imaging spectrometer based on a Savart polariscope", OPTICS COMMUNICATIONS, ELSEVIER, AMSTERDAM, NL, Bd. 203, Nr. 1-2, 1. März 2002 (2002-03-01), Seiten 21-26, XP004343741, ISSN: 0030-4018, DOI: 10.1016/S0030-4018(01)01726-6
- MICHAEL W. KUDENOV ET AL: "Compact snapshot birefringent imaging Fourier transform spectrometer", OPTICAL SENSING II, Bd. 7812, 12. August 2010 (2010-08-12), Seite 781206, XP055320219, 1000 20th St. Bellingham WA 98225-6705 USA ISSN: 0277-786X, DOI: 10.1117/12.864703 ISBN: 978-1-62841-971-9

## Beschreibung

Die Erfindung betrifft ein Miniaturspektrometer und ein Verfahren zur Ermittlung eines Spektrums der von einem Objekt reflektierten, transmittierten oder emittierten Strahlung.

### Stand der Technik

Die Erfindung geht von einem Miniaturspektrometer und einem Verfahren zur Ermittlung eines Spektrums der von einem Objekt reflektierten oder emittierten Strahlung nach der Gattung der unabhängigen Patentansprüche aus.

In "A static polarization imaging spectrometer based on a Savart polariscope" (Zhang et al., Optics Communications 203 (2002), 21-26) wird ein abbildendes Polarisationsspektrometer (PIS) beschrieben, das auf einem einfachen Savart Polariskop basiert. Dieses erzeugt eine zweidimensionale Intensitätsverteilung, die in einer Raumrichtung das Interferogramm und in der dazu orthogonalen Richtung die Bildinformation enthält. Beide Komponenten liegen dabei gleichzeitig vor und müssen voneinander getrennt werden. Diese zweidimensionale Verteilung wird mittels eines zweidimensionalen CCD (chargecoupled device = ladungsgekoppeltes Bauteil) Detektors aufgenommen. Das PIS umfasst eine Unendlich-Optik, ein Polarisationsinterferometer, das einen Polarisator, ein Savart Polariskop und einen Analysator umfasst, eine Abbildungslinse und ein System zur Signalaufnahme und Signalverarbeitung. Die Unendlich-Optik erzeugt aus den von jedem Objektpunkt ankommenden Strahlen in sich parallele Strahlenbündel mit unterschiedlichen Winkeln. Die Auflösung des PIS kann über die Größe des CCD Detektors und die Dicke der doppelbrechenden Schichten, die das Savart Polariskop bilden, eingestellt werden. Die Auflösung steigt mit zunehmender Größe des CCD Detektors und zunehmender Dicke der doppelbrechenden Schichten. Die spektrale Auflösung ist zudem vom nutzbaren Winkelbereich, dem Brechzahlkontrast zwischen den beiden Polarisationsrichtungen und der Brennweite der Linse zwischen Savart Polariskop und Detektor abhängig.

Aus US 2012/0268745 A1 ist ein Fourier-Transformationsspektrometer beschrieben, welches ein Linsenarray und ein doppelbrechendes Interferometer umfasst.

### Vorteile der Erfindung

Die vorliegende Erfindung gibt ein Miniaturspektrometer und ein Verfahren zur Ermittlung eines Spektrums der von einem Objekt reflektierten, transmittierten oder emittierten Strahlung mittels eines erfindungsgemäßen Miniaturspektrometers an.

Ein Miniaturspektrometer ist ein Spektrometer mit Abmessungen im Zentimeterbereich, wobei auch geringere Abmessungen unterhalb des Zentimeterbereichs eingeschlossen sind. Die Erfindung mit den Merkmalen des unabhängigen Patentanspruchs hat den Vorteil, dass das erfindungsgemäße Miniaturspektrometer einen kompakten, miniaturisierbaren Aufbau aufweist. Zudem ist eine kostengünstige Herstellung des erfindungsgemäßen Miniaturspektrometers möglich. Des Weiteren zeichnet sich das erfindungsgemäße Miniaturspektrometer durch eine hohe Nutzerfreundlichkeit und eine Reduzierung von Messfehlern aus, da das Messergebnis in einem großen Bereich unabhängig vom Einfallswinkel des Lichts und vom Abstand zwischen Miniaturspektrometer und Messobjekt ist. Ein weiterer Vorteil der durch das Homogenisieren der räumlichen Bildinformation entsteht ist, dass in den Daten nur die spektrale Information vorliegt und kein komplexes Hintergrundsignal mitberücksichtigt werden muss. Dies steigert die Genauigkeit und Reproduzierbarkeit des erfindungsgemäßen Miniaturspektrometers.

Dies wird erreicht mittels eines Miniaturspektrometers gemäß Anspruch 1. Die Auflösung eines erfindungsgemäßen Miniaturspektrometers hängt vorteilhafterweise nicht von der Beschaffenheit des Objekts und der Art der Lichtquelle ab, da bei dem erfindungsgemäßen Miniaturspektrometer der Diffusor immer für eine Ausnutzung des Akzeptanzwinkels des Savart-Elements des Miniaturspektrometers sorgt. Durch den Diffusor wird der Akzeptanzwinkel von dem Licht, das vom zu untersuchenden Objekt kommt, vollständig ausgeleuchtet.

In einer Weiterbildung des erfindungsgemäßen Miniaturspektrometers umfasst die Detektionseinheit eine Fokussieroptik, wobei die Fokussieroptik im Strahlengang zwischen dem Polarisationsinterferometer und dem Detektor angeordnet ist. Dadurch werden vorteilhafterweise Strahlen mit gleichem Gangunterschied auf einen gemeinsamen Punkt des Detektors fokussiert. Somit kann ein örtlich aufgelöstes Interferogramm erzeugt werden.

Zusätzlich oder alternativ kann das erfindungsgemäße Miniaturspektrometer eine Lichtquelle umfassen. Somit ist es möglich das zu untersuchende Objekt mit dieser Lichtquelle zu beleuchten, sodass vorteilhafterweise die Intensität des vom zu untersuchenden Objekt kommenden Lichts erhöht und damit das Messergebnis verbessert werden kann bzw. eine ausreichend detaillierte Messung erst möglich wird. Je nach Anwendung ist auch nur so die notwendige Kenntnis der spektralen Eigenschaften des das Objekt beleuchtenden Lichts sicher zu stellen. Zudem wird durch die Lichtquelle die Verwendung von vom Umgebungslicht unabhängigen Wellenlängen und spektralen Intensitäten ermöglicht. So können auch Spektren in Frequenzbereichen angeregt werden, die durch das Umgebungslicht nicht oder nur unzureichend abgedeckt sind, wie ultraviolettes oder infrarotes Licht. Des Weiteren kann durch Modulation der Lichtquelle eine Selektion der durch diese Quelle angeregten, absorbierten oder transmittieren Strahlung erfolgen. So wird das vom Objekt ausgehende gemessene Spektrum nicht durch spektrale Anteile von Umgebungsstrahlung verfälscht und ermöglicht auch Messungen in nicht abgedunkelten Räumen. Dies ist insbesondere im alltäglichen Gebrauch außerhalb einer kontrollierten Laborumgebung und somit für den Einsatz in Gütern des alltäglichen Gebrauchs unverzichtbar. Auch kann durch eine solche Lichtquelle selektiv ein bestimmter Bereich beleuchtet werden, was insbesondere bei ausgedehnten Proben mit einer inhomogenen Beschaffenheit von Vorteil ist.

In einer vorteilhaften Ausführungsform wird der Diffusor auf dem Polarisator des Polarisationsinterferometers angeordnet. Dadurch werden ein kompakter Aufbau und eine Miniaturisierung des erfindungsgemäßen Miniaturspektrometers ermöglicht.

Die Dateneinheit des erfindungsgemäßen Miniaturspektrometers kann in einer vorteilhaften Ausgestaltung eine Referenzdatenbank umfassen. Dadurch ist eine interne Auswertung des Spektrums der von einem Objekt reflektierten oder emittierten Strahlung möglich. Das erfindungsgemäße Miniaturspektrometer kann unabhängig von der Verfügbarkeit eines Internetzugangs oder externer Referenzdatenbanken eingesetzt werden.

Alternativ kann die Dateneinheit des erfindungsgemäßen Miniaturspektrometers als Kommunikationsschnittstelle für eine Datenübertragung zwischen dem Miniaturspektrometer und einem externen Auswerteelement, welches eine Referenzdatenbank und eine Datenprozessierungseinheit umfasst, ausgelegt sein. Da die Auswertung extern erfolgen kann, weist das erfindungsgemäße Miniaturspektrometer in dieser Ausführungsform weniger Bauteile auf, als die vorstehende Ausführungsform und lässt sich damit vorteilhafterweise kostengünstiger herstellen. Des Weiteren kann das externe Auswerteelement von mehreren Nutzern verwendet werden und durch das Senden einer Rückmeldung bezüglich der Qualität der Auswertung eine Verbesserung der Referenzdatenbank vorgenommen werden. Zudem kann somit ein Update der Referenzdatenbank vorgenommen werden.

In einer weiteren Ausführungsform des erfindungsgemäßen Miniaturspektrometers ist der Detektor als eindimensionale Sensormatrix ausgebildet. Ein Vorteil ist, dass somit ein sehr kompakter Aufbau und eine Miniaturisierung des erfindungsgemäßen Miniaturspektrometers ermöglicht werden.

In einer alternativen Gestaltungsform wird der Detektor als zweidimensionale Sensormatrix ausgebildet. Ein Vorteil dieser Ausführungsform ist, dass das Interferogramm in einer Dimension dargestellt wird und in Richtung der zweiten Dimension mehrfach wiederholt wird, sodass das Interferogramm über diese zweite Dimension gemittelt werden kann und damit das Signal-zu-Rausch Verhältnis gegenüber der Verwendung einer eindimensionalen Sensormatrix verbessert wird.

In einer weiteren Ausführungsform ist das optische System als gerichteter Diffusor ausgebildet. Dieser kann vorteilhafterweise auf einen Öffnungswinkel des Savart Elements abgestimmt werden.

### Kurze Beschreibung der Zeichnungen

Ausführungsbeispiele der Erfindung sind in den Zeichnungen dargestellt und werden in der nachfolgenden Beschreibung näher erläutert. Gleiche Bezugszeichen in den Figuren bezeichnen gleiche oder gleich wirkende Elemente.

### Es zeigen

Fig. 1a den Aufbau des erfindungsgemäßen Teils eines erfindungsgemäßen Miniaturspektrometers,
Fig. 1b eine schematische Darstellung des Funktionsprinzips eines erfindungsgemäßen Miniaturspektrometers, wobei die einzelnen Komponenten für eine bessere Übersichtlichkeit voneinander separiert dargestellt sind,
Fig. 2 eine Dateneinheit eines erfindungsgemäßen Miniaturspektrometers und deren Funktionsprinzip,
Fig. 3 ein erfindungsgemäßes Miniaturspektrometer mit einem externen Auswerteelement und
Fig. 4 ein erfindungsgemäßes Miniaturspektrometer mit integrierter Lichtquelle.

### Ausführungsformen der Erfindung

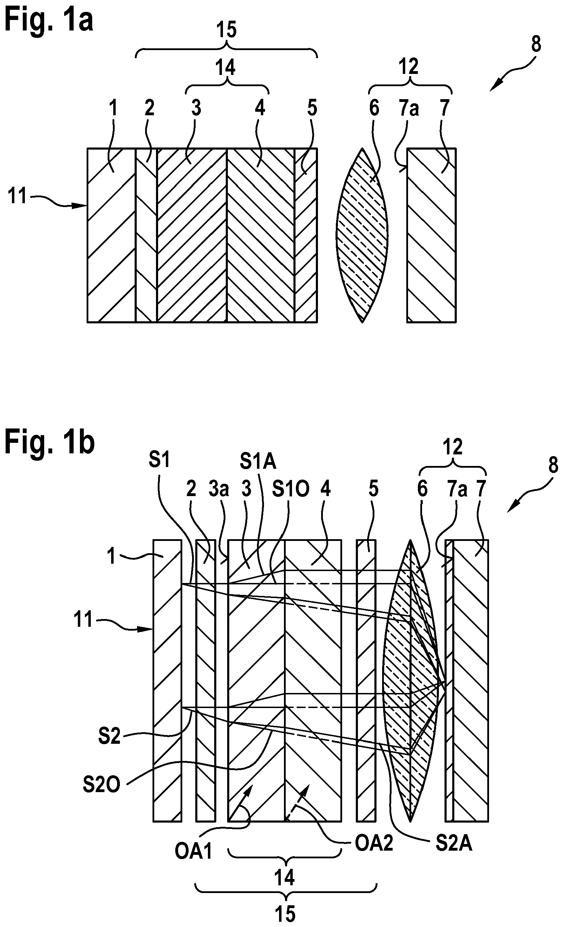

Fig. 1a zeigt den Aufbau eines erfindungsgemäßen Miniaturspektrometers 8. Eine Dateneinheit 13 ist in der Fig. 1a nicht dargestellt. Ein Ausführungsbeispiel eines erfindungsgemäßen Miniaturspektrometers 8 umfasst ein optisches System, das ein Diffusor 1 ist, einen Polarisator 2, einen ersten doppelbrechenden Kristall 3, einen zweiten doppelbrechenden Kristall 4, einen Analysator 5, eine Linse 6 und einen Detektor 7. Die doppelbrechenden Kristalle 3, 4 bilden zusammen ein Savart Element 14. Im Strahlengang auf zwei einander gegenüberliegenden Seiten des Savart Elements sind der Polarisator 2 und der Analysator 5 angeordnet. Diese bilden zusammen mit dem Savart Element 14 ein Polarisationsinterferometer 15. Der Diffusor 1 ist auf einer dem Savart Element 14 gegenüberliegenden Seite des Polarisators 2 angeordnet. In diesem Ausführungsbeispiel ist der Diffusor 1 direkt auf das Polarisationsinterferometer 15 aufgebracht, wodurch sich eine sehr kompakte Anordnung ergibt. Im Strahlengang auf einer dem Savart Element 14 gegenüberliegenden Seite des Analysators 5 ist eine Fokussieroptik 6 angeordnet. In diesem Ausführungsbeispiel ist die Fokussieroptik eine Linse 6. Die Linse 6 ist als Sammellinse ausgebildet, d.h. parallele Strahlen, die auf die Linse 6 auftreffen, schneiden sich in der Brennebene der Linse 6. Der Detektor 7 ist so angeordnet, dass seine strahlungssensitive Oberfläche 7a in der Brennebene der Linse 6 liegt. Die strahlungssensitive Oberfläche 7a dient der Detektion einer Strahlung. In diesem Ausführungsbeispiel wird die strahlungssensitive Oberfläche 7a durch eine zweidimensionale Anordnung einzelner Strahlungssensoren, einer sogenannten zweidimensionalen Sensormatrix, in der Brennebene der Linse 6 realisiert. In einem alternativen Ausführungsbeispiel wird die strahlungssensitive Oberfläche 7a durch eine eindimensionale Anordnung von Strahlungssensoren, einer sogenannten eindimensionalen Sensormatrix, in der Brennebene der Linse 6 realisiert.

Alternativ kann die Fokussieroptik 6 mindestens eines der folgenden Elemente umfassen: refraktives Element, diffraktives Element, holografisch-optisches Element oder reflektives Element.

Eine schematische Darstellung eines Verlaufs der Strahlen durch die verschiedenen Elemente des erfindungsgemäßen Miniaturspektrometers 8 ist in Fig. 1b gezeigt. Die Dateneinheit 13 ist in Fig. 1b nicht dargestellt. Für eine bessere Übersichtlichkeit sind die einzelnen Komponenten des Miniaturspektrometers 8 voneinander beabstandet dargestellt. Durchgezogene Linien liegen in der Zeichenebene, gestrichelte Linien weisen eine Komponente in die Zeichenebene hinein auf. Ein Strahlenverlauf ist beispielhaft für zwei Strahlen S1, S2 gezeigt, die in voneinander verschiedenen Winkeln auf den Polarisator 2 auftreffen. Zudem ist der Verlauf dieser Strahlen S1, S2 von einem weiteren Punkt auf dem Diffusor 1 ausgehend gezeigt. Der Diffusor 1 ist ein optisches Bauelement. Er weist eine Vielzahl kleiner Streuzentren auf. Strahlung, die auf einer ersten Seite 11 des Diffusors 1 auftrifft wird beim Durchgang durch den Diffusor 1 somit in unterschiedliche Richtungen abgelenkt. Die Winkelabhängigkeit der Intensität der Strahlung, die aus dem Diffusor austritt, weist eine definierte Form auf und ist unabhängig von der Winkel- und Intensitätsverteilung der auf der ersten Seite 11 des Diffusors 1 auftreffenden Strahlung. Daher kann das zu untersuchende Objekt in einer Vielzahl von Abständen und Winkeln zu dem Miniaturspektrometer angeordnet werden ohne das Messergebnis des Miniaturspektrometers zu verändern. Die Strahlung, die aus dem Diffusor 1 austritt wird von dem im Strahlengang angeordneten Polarisator 2 linearpolarisiert. Die linearpolarisierte Strahlung tritt nach Durchgang durch den Polarisator 2 zunächst in einen ersten doppelbrechenden Kristall 3 mit einer ersten optischen Achse OA1 ein und durchläuft dann einen zweiten doppelbrechenden Kristall 4 mit einer zweiten optischen Achse OA2. Ein Hauptschnitt des doppelbrechenden Kristalls 3, 4 wird durch die Ebene beschrieben, die senkrecht zur Eintrittsfläche 3a ist und die optische Achse OA1, OA2 enthält. In diesem Ausführungsbeispiel beträgt der Winkel zwischen der ersten optischen Achse OA1 und der Eintrittsfläche 3a 45°. Der Hauptschnitt des zweiten doppelbrechenden Kristalls 4 ist um 90° gegenüber dem Hauptschnitt des ersten doppelbrechenden Kristalls 3 gedreht. Doppelbrechende Materialien weisen für unterschiedliche Polarisation der eintreffenden Strahlung unterschiedliche Brechungsindizes auf. Bei der Doppelbrechung wird die eintreffende Strahlung in zwei zueinander senkrecht polarisierte Komponenten aufgespalten. Zum einen in einen ordentlichen Strahl, dessen elektrisches Feld senkrecht auf dem Hauptschnitt steht, zum anderen in einen außerordentlichen Strahl, dessen elektrisches Feld im Hauptschnitt des doppelbrechenden Kristalls 3, 4 schwingt. Die Wellenfronten des ordentlichen und des außerordentlichen Strahls, die im Folgenden als Teilstrahlen des Strahls, der auf den doppelbrechenden Kristall auftrifft, bezeichnet werden, weisen unterschiedliche Ausbreitungsgeschwindigkeiten auf, die durch die unterschiedlichen Brechungsindizes bestimmt werden. Dadurch weisen der ordentliche Strahl und der außerordentliche Strahl nach Durchgang durch einen doppelbrechenden Kristall 3, 4 eine Phasendifferenz auf, die von der Differenz der unterschiedlichen Brechungsindizes, der Dicke der doppelbrechenden Kristalle 3, 4 und vom Einfallswinkel abhängt. Diese Phasendifferenz ist proportional zu einem Gangunterschied der Teilstrahlen. In diesem Ausführungsbeispiel wird der Polarisator 2 so gewählt, dass der ordentliche Strahl und der außerordentliche Strahl im Savart Element 14 die gleiche Intensität aufweisen. Die Polarisationsrichtung ist folglich so gewählt, dass sie einen Winkel von 45° bezüglich der Hauptschnitte der doppelbrechenden Kristalle 3, 4 aufweist. Der erste Strahl S1 trifft senkrecht auf den ersten doppelbrechenden Kristall 3 auf. Im ersten doppelbrechenden Kristall wird er in einen ordentlichen Strahl S1O und einen außerordentlichen Strahl S1A aufgespalten. Der ordentliche Strahl S1O wird entsprechend dem Snellius'schen Brechungsgesetz gebrochen, daher durchläuft er den ersten doppelbrechenden Kristall 3 ohne Ablenkung. Eine Dielektrizitätszahl gibt die Durchlässigkeit eines Materials für elektrische Felder an. Sie wird im Allgemeinen durch einen Tensor beschrieben. Damit ist das elektrische Feld im Allgemeinen nicht parallel zur elektrischen Flussdichte. Ein Ausbreitungsvektor steht sowohl im Material als auch außerhalb des Materials senkrecht auf der elektrischen Flussdichte. Die Richtung des Ausbreitungsvektors bleibt auch im außerordentlichen Strahl S1A erhalten. Die Ausbreitungsrichtung des außerordentlichen Strahls S1A wird aber nach wie vor durch einen Poyntingvektor bestimmt, der senkrecht auf dem elektrischen Feld steht. Der Winkel zwischen dem Ausbreitungsvektor und dem Poyntingvektor ist gleich dem Winkel zwischen dem elektrischen Feld und der elektrischen Flussdichte. Somit kann aus den Komponenten des elektrischen Feldes der Winkel bestimmt werden unter dem der außerordentliche Strahl S1A den ersten doppelbrechenden Kristall 3 durchläuft. Der Hauptschnitt des zweiten doppelbrechenden Kristalls 4 steht senkrecht auf dem Hauptschnitt des ersten doppelbrechenden Kristalls 3. Das elektrische Feld des außerordentlichen Strahls S1A schwingt somit senkrecht zum Hauptschnitt des zweiten doppelbrechenden Kristalls 4. Beim Eintritt in den zweiten doppelbrechenden Kristall 4 wird er zum neuen ordentlichen Strahl des zweiten doppelbrechenden Kristalls 4 und wird entsprechend dem Snellius'schen Brechungsgesetz gebrochen. Das elektrische Feld des ordentlichen Strahls S1O schwingt im Hauptschnitt des zweiten doppelbrechenden Kristalls 4. Daher wird er beim Eintritt in den zweiten doppelbrechenden Kristall 4 zum neuen außerordentlichen Strahl und durchläuft den zweiten doppelbrechenden Kristall unter einem Winkel, der aus den Komponenten des elektrischen Feldes des neuen außerordentlichen Strahls bestimmt werden kann. Nach Durchgang durch das Savart Element 14 treten die Teilstrahlen des Strahls S1 also an verschiedenen Punkten aus dem Savart Element 14 aus und verlaufen anschließend aufgrund des Snellius'schen Brechungsgesetzes wieder parallel zueinander und senkrecht zur Eintrittsfläche 3a. Sie weisen jedoch wie vorstehend beschrieben einen Phasenunterschied auf. Die Phasendifferenz der beiden Teilstrahlen hängt wie vorstehend beschrieben unter anderem vom Eintrittswinkel in das Savart Element 14 ab und ist null für den senkrechten Strahl S1. Im Strahlengang hinter dem Savart Element 14 ist der Analysator 5 angeordnet, der die Strahlung in der gleichen Richtung wie der Polarisator 2 polarisiert. Die beiden Teilstrahlen weisen nach Durchgang durch den Analysator 5 die gleiche Polarisation auf. Somit können die Teilstrahlen interferieren. Es werden die Teilstrahlen mittels einer Sammellinse 6 auf einen Punkt in deren Brennebene fokussiert. Die beiden Teilstrahlen interferieren. Es ergibt sich ein Intensitätsfleck auf dem Detektor 7, der in der Brennebene der Linse 6 angeordnet ist. Da die Sammellinse 6 alle Strahlen, die parallel auf sie auftreffen auf einen Punkt in der Brennebene fokussiert, bilden alle Strahlen, die wie der erste Strahl S1 senkrecht auf das Savart Element 14 auftreffen einen gemeinsamen Intensitätsfleck auf dem Detektor. Der zweite Strahl S2 trifft in einem anderen Winkel als der erste Strahl S1 auf das Savart Element 14 auf. In der Fig. 1b ist der schematische Verlauf des zweiten Strahls S2 beginnend an verschiedenen Positionen auf dem Diffusor 1 eingezeichnet. Auch er wird in einen ordentlichen Strahl S2O und einen außerordentlichen Strahl S2O aufgespalten. Der ordentliche Strahl S1O wird im Material entsprechend dem Snellius'schen Brechungsgesetz gebrochen. Der Verlauf des außerordentlichen Strahls S2A wird wie vorstehend beschrieben bestimmt. Alle Strahlen die unter dem gleichen Winkel wie der zweite Strahl S2 auf das Savart Element 14 auftreffen werden nach Passieren des Polarisationsinterferometers 15 auf einen gemeinsamen Intensitätsfleck in der Brennebene der Linse 6 fokussiert. Dieser Intensitätsfleck wird vom Detektor 7 detektiert. Jeder Intensitätsfleck auf dem Detektor 7 entspricht somit einem anderen Gangunterschied. Das Savart Element 14 generiert unterschiedliche Gangunterschiede. Mit zunehmendem Abstand von der Mitte des Detektors 7 werden die Intensitätsflecken von interferierenden Teilstrahlen mit immer größerem Gangunterschied gebildet. Somit wird auf dem Detektor ein örtlich aufgelöstes Interferogramm erzeugt. Dies wird für eine Fouriertransformationsspektroskopie benötigt.

In einer typischen Ausführungsform ist der Diffusor 1 eine 1 mm dicke Quarzglasplatte mit Streupartikeln, die auf eine Polarisationsfolie 2 mit 0,5 mm Dicke geklebt wird, die auf einem Savart-Element 14, umfassend zwei jeweils 3mm dicke Platten aus Rutil, die so angeordnet sind, dass die optischen Achsen OA1, OA2 einen Winkel von jeweils 45° zur Eintrittsoberfläche und in 90° zueinander angeordneten Hauptschnitten liegen. Alternativ können in einer weiteren Ausführungsform statt der Platten aus Rutil Platten aus Calcit angeordnet werden. Auf der Austrittfläche des Savart Elements 14 wird eine weitere Polarisationsfolie mit 0,5mm Dicke angebracht, die als Analysator 5 wirkt. Das ausfallende Licht wird dann typischerweise über eine achromatische Fokussierlinse 6 mit einer Brennweite von typischerweise 4mm auf ein 2-dimensionales Photodetektorarray 7a mit typischerweise 4mm Diagonale und 5 Millionen Bildpunkten abgebildet.

Die Signale der einzelnen Pixel enthalten entlang einer Richtung (z.B. Zeile) das Interferogramm, aus dem durch Fouriertransformation das Spektrum des auf den Diffusor 1 treffenden Lichts gewonnen werden kann. In der anderen Richtung wiederholt sich diese Information, sodass über Mittelung eine Signalverbesserung erreicht werden kann. Das so gewonnene Spektrum kann dann entweder direkt mit Referenzspektren verglichen werden, oder vorher chemometrisch ausgewertet und dann mit Referenzwerten verglichen werden, um so auf die Zusammensetzung des untersuchten Objektes zu schließen.

In einem weiteren Ausführungsbeispiel wird der Winkel zwischen der ersten optischen Achse OA1 und der Eintrittsfläche 3a zwischen 30° und 60° gewählt.

Als Detektoreinheit 12 kann in einem weiteren Ausführungsbeispiel keine fest verbaute Detektoreinheit 12 sondern die Kamera eines Mobilfunkgeräts oder einer Sicherheitskamera verwendet werden, die extern angeordnet ist. Der Diffusor 1 und das Polarisationsinterferometer 15 bilden dabei eine Einheit, die bei Benutzung auf der Kamera angeordnet werden kann.

In einem weiteren Ausführungsbeispiel kann ein gerichteter Diffusor 1 verwendet werden, der auf einen geeigneten Öffnungswinkel des Savart Elements abgestimmt ist.

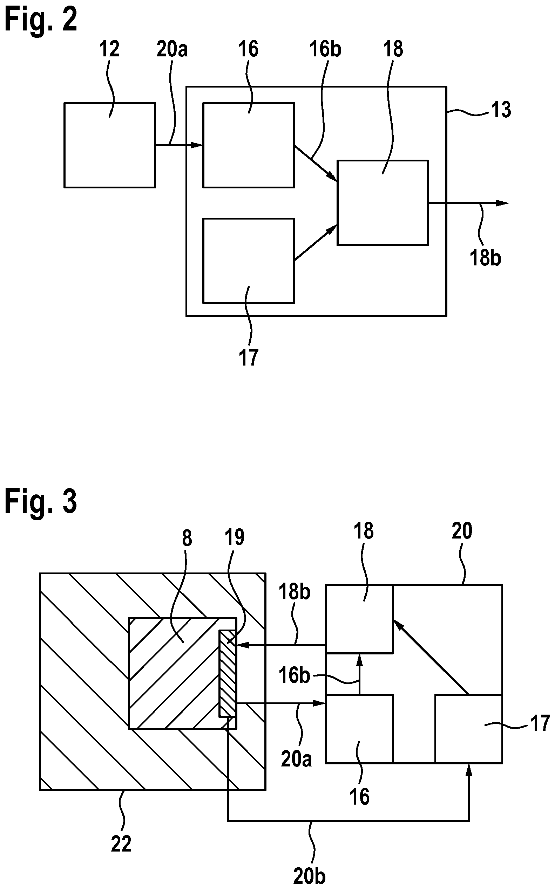

In Fig. 2 ist das Funktionsprinzip einer Dateneinheit 13 gezeigt, die in einem Ausführungsbeispiel in das Miniaturspektrometer 8 integriert ist. In der Detektoreinheit 12 wird ein ortsaufgelöstes Interferogramm 20a erzeugt. Dieses wird an die Dateneinheit 13 übermittelt. Die Dateneinheit 13 umfasst in diesem Ausführungsbeispiel eine Datenprozessierungseinheit 16, eine Referenzdatenbank 17 und eine Vergleichseinheit 18. Das ortsaufgelöste Interferogramm 20a wird an die Datenprozessierungseinheit 16 übermittelt. Dort erfolgt eine Fouriertransformation des Interferogramms. Das fouriertransformierte Interferogramm ist ein Spektrum 16b der von einem zu untersuchenden Objekt reflektierten, transmittierten oder emittierten Strahlung. In der Referenzdatenbank 17 sind Spektren bekannter Objekte, chemischer Verbindungen, Materialien, etc. abgespeichert. In der Vergleichseinheit 18 wird das Spektrum 16b der von einem zu untersuchenden Objekt reflektierten, transmittierten oder emittierten Strahlung mit den bekannten Spektren verglichen, dies kann vor oder nach Anwendung chemometrischer Algorithmen geschehen. Somit wird das Spektrum 16b der von einem zu untersuchenden Objekt reflektierten, transmittierten oder emittierten Strahlung einem bekannten Objekt, einer bekannten chemischen Verbindung, einem bekannten Material, etc. zugeordnet. Dies gibt Aufschluss über das zu untersuchende Objekt. Den Ausgang der Dateneinheit 13 bildet die spektrale Information 18b oder daraus ermittelte höherwertige Information wie z.B. Materialeigenschaften des zu untersuchenden Objekts. Dabei können dem Nutzer wahlweise Rohdaten 20a, das fouriertransformierte Spektrum 16b oder die nach der chemometrischen Analyse erhaltenen Information über das Objekt angezeigt werden.

Fig. 3 zeigt ein Ausführungsbeispiel, bei dem die Dateneinheit als Kommunikationsschnittstelle 19 ausgebildet ist. Das Miniaturspektrometer 8 ist hierbei in ein elektronisches Gerät 22 integriert. Die Kommunikationsschnittstelle 19 ermöglicht eine Datenübertragung 18b, 20a, 20b zwischen dem Miniaturspektrometer 8 und einem externer Auswerteelement 20. Die Datenübertragung 18b, 20a, 20b kann beispielsweise über eine Internetanbindung, LAN, WLAN, USB, Bluetooth oder Infrarotstrahlung realisiert werden. Das Auswertelement 20 ist dazu ausgelegt die Daten von der Kommunikationsschnittstelle 19 zu empfangen. Die Auswertung des vom Detektor 7 aufgenommenen Interferogramms 20a erfolgt in diesem Ausführungsbeispiel nicht im Miniaturspektrometer 8 sondern in dem externen Auswertelement 20. Das externe Auswerteelement 20 umfasst eine Datenprozessierungseinheit 16, eine Referenzdatenbank 17 und eine Vergleichseinheit 18. Die Übermittlung des ortsaufgelösten Interferogramms 20a erfolgt via Datenübertragung 18b, 20a, 20b an die Datenprozessierungseinheit 16, z. B. in einer Cloud. Diese erzeugt daraus mittels Fouriertransformation das Spektrum 16b der von einem zu untersuchenden Objekt reflektierten, transmittierten oder emittierten Strahlung. In der Vergleichseinheit 18 wird wie vorstehend beschrieben das Spektrum 16b der von einem zu untersuchenden Objekt reflektierten, transmittierten oder emittierten Strahlung mit den bekannten Spektren der Referenzdatenbank 17 verglichen, dies kann vor oder nach Anwendung chemometrischer Algorithmen geschehen. Die spektrale Information 18b des zu untersuchenden Objekts ist ein Auswertungsergebnis, das via Datenübertragung zurück an die Kommunikationsschnittstelle 19 gesendet wird. In diesem Ausführungsbeispiel ist eine Rückmeldung 20b des Nutzers des elektronischen Geräts 22 via Datenübertragung 18b, 20a, 20b vorgesehen. Der Nutzer bewertet das Auswerteergebnis nach Möglichkeit bezüglich seiner Qualität. Dadurch kann die Referenzdatenbank 17 des externen Auswerteelements 20 aktualisiert und verbessert werden. Insbesondere kann das externe Auswerteelement 20 von mehreren Nutzern verwendet werden. Durch die Bewertungen der Nutzer wird die Qualität der Auswerteergebnisse verbessert. So kann der Nutzer Spektren von ihm bekannten Substanzen aufnehmen und bewerten, ob diese von dem Gerät richtig erkannt wurden.

In einem hier nicht gezeigten Ausführungsbeispiel umfasst das externe Auswerteelement 20 eine Referenzdatenbank 17 und eine Vergleichseinheit 18. Die Dateneinheit ist in diesem Ausführungsbeispiel als Kommunikationsschnittstelle 19 ausgelegt und umfasst die Datenprozessierungseinheit 16. Die Kommunikationsschnittstelle 19 ermöglicht eine Datenübertragung zwischen dem Miniaturspektrometer 8 und dem externen Auswerteelement 20. Die Datenübertragung kann beispielsweise über eine Internetanbindung, LAN, WLAN, USB, Bluetooth oder Infrarotstrahlung realisiert werden. Das Auswertelement 20 ist dazu ausgelegt die Daten von der Kommunikationsschnittstelle 19 zu empfangen. Es wird das Spektrum 16b der von einem zu untersuchenden Objekt reflektierten, transmittierten oder emittierten Strahlung in der Datenprozessierungseinheit 16 bestimmt und via Datenübertragung an das externe Auswertelement 20 übermittelt. Dort erfolgt die Auswertung wie vorstehend beschrieben.

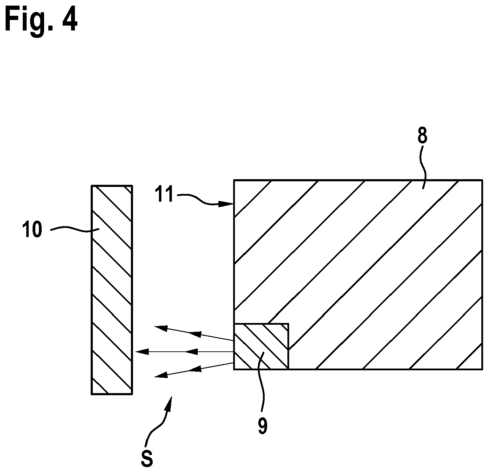

Fig. 4 zeigt ein Ausführungsbeispiel eines Miniaturspektrometers 8 mit integrierter Lichtquelle 9. Mittels der Lichtquelle wird das zu untersuchende Objekt 10 bestrahlt S, um die Intensität der reflektierten Strahlung zu erhöhen oder das zu untersuchende Objekt zur Emission von Strahlung anzuregen.

## Patentansprüche

1. Miniaturspektrometer (8), umfassend
- ein optisches System,
- ein Polarisationsinterferometer (15), umfassend einen Polarisator (2), ein Savart Element (14) und einen Analysator (5),
- eine Detektionseinheit (12), die einen Detektor (7) umfasst und
- eine Dateneinheit (13),
**dadurch gekennzeichnet, dass** das optische System als Diffusor (1) ausgebildet ist, wobei der Diffusor (1) für eine Ausnutzung des Akzeptanzwinkels des Savart Elements (14) des Miniaturspektrometers (8) sorgt und der Diffusor (1) auf dem Polarisator (2) des Polarisationsinterferometers (15) angeordnet ist.

2. Miniaturspektrometer (8) nach Anspruch 1, **dadurch gekennzeichnet, dass** die Detektionseinheit (12) eine Fokussieroptik (6) umfasst, wobei die Fokussieroptik (6) im Strahlengang zwischen dem Polarisationsinterferometer (15) und dem Detektor (7) angeordnet ist.

3. Miniaturspektrometer (8) nach einem der vorhergehenden Ansprüche, **dadurch gekennzeichnet, dass** das Miniaturspektrometer (8) eine Lichtquelle (9) umfasst.

4. Miniaturspektrometer (8) nach einem der vorhergehenden Ansprüche, **dadurch gekennzeichnet, dass** die Dateneinheit (13) eine Referenzdatenbank (17) umfasst.

5. Miniaturspektrometer (8) nach einem der Ansprüche 1 bis 3, **dadurch gekennzeichnet, dass** die Dateneinheit (13) als Kommunikationsschnittstelle für eine Datenübertragung (18b, 20a, 20b) zwischen dem Miniaturspektrometer (8) und einem externen Auswerteelement (20), umfassend eine Referenzdatenbank (17) und eine Datenprozessierungseinheit (16), ausgelegt ist.

6. Miniaturspektrometer (8) nach einem der vorhergehenden Ansprüche, **dadurch gekennzeichnet, dass** der Detektor (7) als eindimensionale Sensormatrix ausgebildet ist.

7. Miniaturspektrometer (8) nach einem der Ansprüche 1 bis 5, **dadurch gekennzeichnet, dass** der Detektor (7) als zweidimensionale Sensormatrix ausgelegt ist.

8. Miniaturspektrometer nach einem der vorhergehenden Ansprüche, **dadurch gekennzeichnet, dass** das optische System ein gerichteter Diffusor (1) ist, wobei der gerichtete Diffusor (1) auf einen Öffnungswinkel des Savart Elements (14) abgestimmt ist.

9. Verfahren zur Ermittlung eines Spektrums (18b) der von einem Objekt reflektierten, transmittierten oder emittierten Strahlung mittels eines Miniaturspektrometers (8) nach einem der vorhergehenden Ansprüche.

## Claims

1. Miniature spectrometer (8), comprising
- an optical system,
- a polarization interferometer (15) comprising a polarizer (2), a Savart element (14) and an analyzer (5),
- a detection unit (12) comprising a detector (7), and
- a data unit (13),
**characterized in that** the optical system is configured as a diffuser (1), wherein the diffuser (1) ensures that the acceptance angle of the Savart element (14) of the miniature spectrometer (8) is fully utilized and the diffuser (1) is arranged on the polarizer (2) of the polarization interferometer (15).

2. Miniature spectrometer (8) according to Claim 1, **characterized in that** the detection unit (12) comprises a focusing optical unit (6), wherein the focusing optical unit (6) is arranged in the beam path between the polarization interferometer (15) and the detector (7).

3. Miniature spectrometer (8) according to one of the preceding claims, **characterized in that** the miniature spectrometer (8) comprises a light source (9).

4. Miniature spectrometer (8) according to one of the preceding claims, **characterized in that** the data unit (13) comprises a reference database (17).

5. Miniature spectrometer (8) according to one of Claims 1 to 3, **characterized in that** the data unit (13) is designed as a communication interface for data transmission (18b, 20a, 20b) between the miniature spectrometer (8) and an external evaluation element (20) comprising a reference database (17) and a data processing unit (16).

6. Miniature spectrometer (8) according to one of the preceding claims, **characterized in that** the detector (7) is in the form of a one-dimensional sensor matrix.

7. Miniature spectrometer (8) according to one of Claims 1 to 5, **characterized in that** the detector (7) is in the form of a two-dimensional sensor matrix.

8. Miniature spectrometer according to one of the preceding claims, **characterized in that** the optical system is a directional diffuser (1), wherein the directional diffuser (1) is adapted to an opening angle of the Savart element (14).

9. Method for ascertaining a spectrum (18b) of the radiation that is reflected, transmitted or emitted by an object using a miniature spectrometer (8) according to one of the preceding claims.

## Revendications

1. Spectromètre miniature (8), comprenant
- un système optique,
- un interféromètre de polarisation (15) comprenant un polarisateur (2), un élément de Savart (14) et un analyseur (5),
- une unité de détection (12), qui comporte un détecteur (7), et
- une unité de données (13),
**caractérisé en ce que** le système optique est réalisé sous la forme d'un diffuseur (1), le diffuseur (1) veillant à une exploitation de l'angle d'acceptation de l'élément de Savart (14) du spectromètre miniature (8) et le diffuseur (1) étant disposé sur le polarisateur (2) de l'interféromètre de polarisation (15).

2. Spectromètre miniature (8) selon la revendication 1, **caractérisé en ce que** l'unité de détection (12) comprend une optique de concentration (6), l'optique de concentration (6) étant disposée dans le trajet du rayon entre l'interféromètre de polarisation (15) et le détecteur (7).

3. Spectromètre miniature (8) selon l'une des revendications précédentes, **caractérisé en ce que** le spectromètre miniature (8) comprend une source de lumière (9) .

4. Spectromètre miniature (8) selon l'une des revendications précédentes, **caractérisé en ce que** l'unité de données (13) comprend une base de données de référence (17).

5. Spectromètre miniature (8) selon l'une des revendications 1 à 3, **caractérisé en ce que** l'unité de données (13) est conçue comme une interface de communication pour une transmission de données (18b, 20a, 20b) entre le spectromètre miniature (8) et un élément d'interprétation (20) externe comprenant une base de données de référence (17) et une unité de traitement de données (16).

6. Spectromètre miniature (8) selon l'une des revendications précédentes, **caractérisé en ce que** le détecteur (7) est réalisé sous la forme d'une matrice de détecteur unidimensionnelle.

7. Spectromètre miniature (8) selon l'une des revendications 1 à 5, **caractérisé en ce que** le détecteur (7) est conçu sous la forme d'une matrice de détecteur bidimensionnelle.

8. Spectromètre miniature selon l'une des revendications précédentes, **caractérisé en ce que** le système optique est un diffuseur orienté (1), le diffuseur orienté (1) étant accordé sur un angle d'ouverture de l'élément de Savart (14).

9. Procédé de détermination d'un spectre (18b) du rayonnement réfléchi, transmis ou émis par un objet au moyen d'un spectromètre miniature (8) selon l'une des revendications précédentes.
